Europäisches Patentamt

European Patent Office

Office européen des brevets

(11) Veröffentlichungsnummer: **0 325 685**
**A2**

## (12) EUROPÄISCHE PATENTANMELDUNG

(21) Anmeldenummer: 88110515.9

(22) Anmeldetag: 01.07.88

(51) Int. Cl.⁴: **G01K 7/32 , G01K 1/02**

(30) Priorität: 24.12.87 DE 3744196

(43) Veröffentlichungstag der Anmeldung:
**02.08.89 Patentblatt 89/31**

(84) Benannte Vertragsstaaten:
**CH DE FR GB IT LI NL**

(71) Anmelder: **Heraeus Sensor GmbH**
**Heraeusstrasse 12-14**
**D-6450 Hanau am Main(DE)**

(72) Erfinder: **Ziegler, Horst, Prof. Dr.**
**Steinhauser Weg 13**
**D-4790 Paderborn(DE)**
Erfinder: **Behlen, Horst**
**Lange Trift 21**
**D-4790 Paderborn-Dahl(DE)**

(74) Vertreter: **Heinen, Gerhard, Dr.**
**W.C. Heraeus GmbH Zentralbereich Patente**
**und Lizenzen Heraeusstrasse 12-14**
**D-6450 Hanau(DE)**

(54) **Elektronisches Thermometer.**

(57) Ein elektronisches Thermometer weist einen Oszillator auf, dessen frequenzbestimmendes Glied ein als Meßsonde ausgebildetes temperatursensitives piezoelektrisches Element ist, das in einem abgeschlossenen Gehäuse angeordnet ist; das piezoelektrische Element ist mit zwei Anschlußelektroden versehen, die über ein induktiv gekoppeltes Spulenpaar von der Oszillatorschaltung galvanisch getrennt sind, wobei die mit den Anschlußelektroden verbundene Spule von dem Gehäuse dicht umschlossen ist; an die Oszillatorschaltung ist eine Auswerteeinheit zur Ermittlung der Temperatur angeschlossen.

EP 0 325 685 A2

### "Elektronisches Thermometer

Die Erfindung betrifft ein elektronisches Thermometer mit einem Oszillator, dessen frequenzbestimmendes Glied ein als Meßsonde eingesetzter mit zwei Anschlußelektroden versehenes temperatursensitives piezoelektrisches Element ist, wobei der elektrische Kreis der Anschlußelektroden eine galvanische Trennung zur Oziallatorschaltung aufweist und daß an die Oziallatorschaltung eine Auswerteeinheit zur Ermittlung der Temperatur angeschlossen ist.

Aus der EP-PS 41 168 ist eine Temperaturmeßsonde mit einem Schwingquarz als temperatursensitives Element bekannt, das in einem abgeschlossenen Metallgehäuse untergebracht ist, welches beispielsweise Helium als Füllgas aufweist. Die durch die Gehäusewand geführten elektrischen Leitungsdurchführungen sind durch sie umgebende Glasmuffen abgedichtet und gegenüber der Gehäusewand elektrisch isoliert.

In der Praxis erweisen sich solche Abdichtungen insbesondere bei höheren Temperaturen aufgrund unterschiedlicher Wärmeausdehungskoeffizienten und wärmeempfindlicher Isolierstoffe als problematisch, so daß der obere Temperaturmeßbereich solcher Temperaturmeßsonden durch die Leitungsdurchführungen begrenzt ist; weiterhin sind solche Durchführungen in der Herstellung verhältnismäßig aufwendig.

Eine Möglichkeit zur Übertragung von Signalen ohne galvanische Verbindung ist aus der DE-OS 33 18 538 bekannt, in der eine Signalübertragung mittels induktiver Kopplung zweier Spulen beschrieben ist. Dabei wird die differenzierende Wirkung der Spulen zur Übertragung der Flanken eines Digitalsignals ausgenutzt. Diese Offenlegungsschrift bezieht sich ausdrücklich auf die schwache Kopplung eines Streufeldes, so daß sie für den Einsatz in Oszillatoren, in denen eine möglichst gute Kopllung erforderlich ist, nicht geeignet ist.

Die Erfindung stellt sich die Aufgabe, eine hermetisch dichte Abschließung des temperatursensitiven piezoelektrischen Elements zum Schutz vor Alterung durch äußere Einflüsse zu schaffen, die eine verhältnismäßig einfache Herstellung sowie eine Erhöhung der Temperaturobergrenze bis zu einem Bereich von 350 bis 400 °C ermöglicht.

Die Aufgabe der Erfindung wird durch die kennzeichnenden Merkmale des Anspruchs 1 gelöst.

Weitere vorteilhafte Ausgestaltungen der Erfindung sind in den Unteransprüchen angegeben.
In einer bevorzugten Ausführungsform ist das piezoelektrische Element durch ein Gehäuse aus Quarzglas eingeschlossen. Dabei ist es jedoch möglich, die äußere Spule beweglich anzuordnen, so daß sie beispielsweise zu Testzwecken nacheinander mit einer Vielzahl von inneren Spulen induktiv koppelbar ist. Als piezoelektrisches Element wird vorzugsweise ein temperatursensitiver Schwingquarz eingesetzt.

Als vorteilhaft erweist sich nach der erfindungsgemäßen Anordnung die Möglichkeit der Optimierung durch Anpassung der Windungszahlen beider Spulen; dadurch kann die HF-Impedanz des Quarzes an die HF-Impedanz der Oszillatorschaltung angepaßt werden.

Als besonders vorteilhaft erweist sich die Möglichkeit der Anordnung des hermetisch abgeschlossenen temperatursensitiven piezoelektrishen Elements in aggressiven Medien, wie z.B. Elektrolyten von Elektrolyseanlagen, wobei die elektronisch empfindlichen Teile der Oszillatorschaltung außerhalb des Elektrolyten angeordnet sind. Weiterhin ist es als vorteilhaft anzusehen, daß das piezoelektrische Element auf dem Läufer von rotierenden Wellen, zur Messung der Wicklungstemperatur in elektrischen Maschinen oder zur Messung in der Probenebene von rotierenden Wettertestgerägten, angeordnet sein kann, wobei durch induktive Kopplung in axialer Richtung zwischen der im rotierenden Gehäuse angeordneten inneren Spule und feststehenden äußeren Spule das Frequenzsignal übertragen wird, ohne daß hierzu irgend eine leitende Verbindung über Schleifringe oder irgendwelche Funkverbindungen erforderlich sind. Hier erweist es als besonders vorteilhaft, daß im rotierenden Teil außer dem piezoelektrischen Element keinerlei elektronische Bauelemente mit ihrem begrenzten Temperaturbereich enthalten sind, wie es beispielsweise bei optischer oder induktiver Fremdeinspeisung von Hilfsenergie in den rotierenden Teil erforderlich ist.

Im folgenden ist der Gegenstand der Erfindung anhand der Figuren 1 bis 3 näher erläutert. Dabei zeigt Figur 1 schematisch einen Querschnitt durch ein das piezoelektrische Element umschließendes Gehäuse, die Figuren 2a, 2b zeigen eine Anordnung mit einem zylindersymmetrischen Gehäuse, während in Figur 3 die Möglichkeit einer Halterung für ein zylindersymmetrisches Gehäuse dargestellt ist.

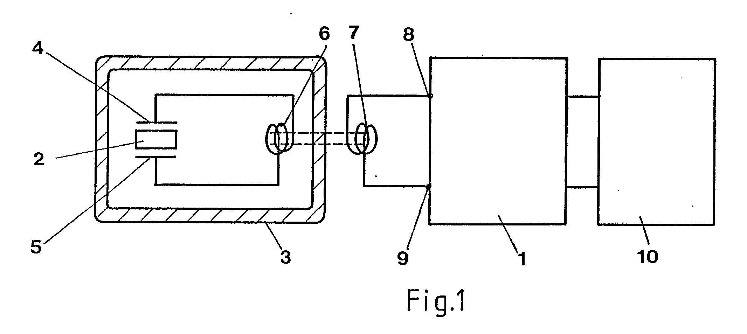

Gemäß Figur 1 befindet sich das schematisch dargestellte piezoelektrische Element 2 in einem Gehäuse 3 aus dia- oder paramagnetischem Werkstoff, so daß keine magnetische Abschirmung erfolgt. Als besonders vorteilhaft haben sich die Werkstoffe Keramik, Glas und Quarzglas erwiesen, da sie eine hohe Temperaturbeständigkeit aufweisen. Die mit beiden Anschlußelektroden 4, 5 des piezoelektrischen Elementes 2 verbundene innere Spule 6 ist flächenhaft auf die Innenseite des Gehäuses 3 aufgebracht, wobei die Wicklung spiralförmig um die Spulenachse verläuft. Zwischen der inneren Spule 6 und einer äußeren Spule 7 besteht eine induktive Kopplung. Spule 7 ist über die Anschlüsse 8, 9 mit der Oszillatorschaltung 1 verbunden, die zwecks Ermittlung der Temperatur mit einer Auswerteeinheit 10 verbunden ist.

Aufgrund der hermetisch dichten Einkapselung ist es möglich, das als Meßsonde dienende piezoelektrische Element in einer aggressiven Umgebung, beispielsweise in Elektrolysezellen, einzusetzen. Die Temperaturerfassung erfolgt dabei auf induktivem Wege durch die Gehäusewand.

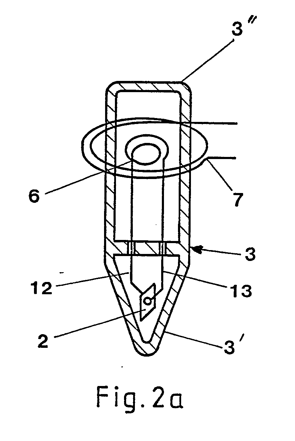

Figur 2a zeigt eine Anordnung bei der das das piezoelektrische Element 2 umschließende Gehäuse 3 rohrförmig nach Art eines Quecksilberfieberthermometers ausgebildet ist, wobei in der Meßspitze 3' des Gehäuses 3 das Element 2 untergebracht ist. Im dem der Meßspitze entgegengesetzten Ende 3" ist eine mit den Anschlußelektroden des Elementes 2 verbundene spiralförmige Spule 6 angeordnet, die ihrerseits mit einer auf das Ende 3" aufsteckbaren äußeren Spule 7 induktiv gekoppelt ist. Spule 7 kann beispielsweise über eine Leitung zu einem stationären Gerät führen, in dem sich die Oszillatorschaltung und die Auswerteeinheit befinden. Eine solche Anordnung ist insbesondere im medizinischen Bereich einsetzbar, da nach Entfernung der aufsteckbaren Spule 7 das Gehäuse 3 einem Sterilisationsprozeß unterworfen werden kann. Der Sterilisationsprozeß ist für die Bauteile im Gehäuse 3 unproblematisch, da das piezoelektrische Element und Spule eine ausreichende Hitzebeständigkeit für die Dampfsterilisation aufweisen, während die wärmeempfindlichen Bauteile, wie Halbleiter und Stromversorgung, sich außerhalb des Gehäuse befinden.

Diese Anordnung ist jedoch aus zur Temperaturmessung in aggressiven Medien geeignet, wobei lediglich die Meßspitze 3' eingetaucht wird.

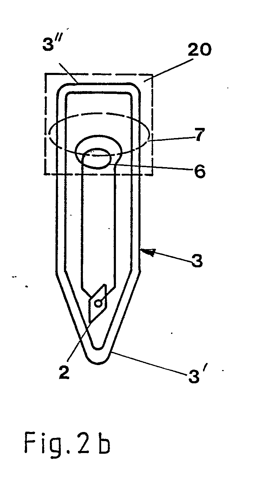

Eine Variante der in Figur 2a dargestellten Anordnung ist in Figur 2b gezeigt; gemäß Figur 2b wird zusammen mit der äußeren Spule eine komplette Einheit 20 mit Oszillatorschaltung und Auswerteeinheit auf das Ende 3" des Gehäues aufgesteckt, wobei die komplette Einheit zwecks Sterilisation des Gehäuses 3 abnehmbar ist.

Die in Figur 2a dargestellte Ausführungsform ist auch in einer Meßanordnung mit rotierender Welle geeignet, wobei das Gehäuse 3 beispielsweise auf dem Ende einer Welle angeordnet ist und zwischen der im Gehäuse 3 befindlichen inneren Spule 6 und einer feststehenden äußeren Spule 7 eine induktive Kopplung in axialer Richtung, d.h. in Richtung der Drehachse der Welle erfolgt; die äußere Spule 7 ist mit der Oszillatorschaltung und Auswerteeinheit verbunden.

Es ist jedoch aus möglich, anstelle des Permanentmagneten einen Elektromagneten einzusetzen, welcher von einem additiven Gleichstrom in der ule gespeist werden kann.

Weiterhin ist die in Figur 2a dargestellte Anordnung auch zum Einsatz der Meßssonde auf dem rotiernden Probenträger eines Wettertestgerätes geeignet, wobei die äußere Spule den gesamten Probenträger ringförmig umgibt und die induktive Kopplung in Richtung der Drehachse des Probenträger erfolgt.

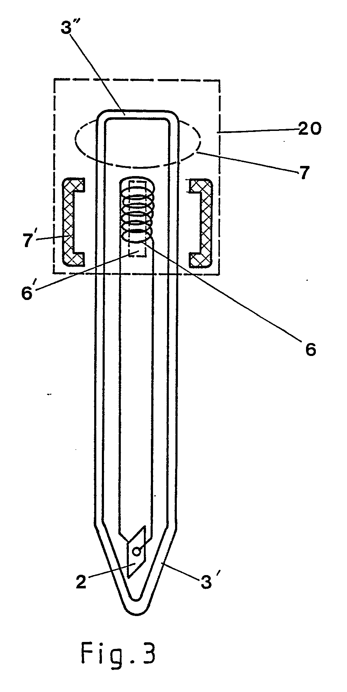

Figur 3 zeigt eine einen Ferritkern 6' umschießende innere Spule 6 im Gehäuse 3, das an seinem Ende 3" von einem Permanentmagneten 7' bzw. einem Elektromagneten umgeben ist, der zur Zentrierung einer aufsteckbaren Einheit 20 gemäß Figur 2b dient.

Diese Anordnung ist auch zum Einsatz eines drehbaren Gehäuses 3 geeignet, wobei die aufsteckbare Einheit 20 ortsfest angebracht ist.

## Ansprüche

1. Elektronisches Thermometer mit einem Oszillator, dessen frequenzbestimmendes Glied ein als Meßsonde eingesetzter mit zwei Anschlußelektroden versehenes temperatursensitives piezoelektrisches Element ist, wobei der elektrische Kreis der Anschlußelektroden eine galvanische Trennung zur Oziallatorschaltung aufweist und daß an die Oszillatorschaltung eine Auswerteeinheit zur Ermittlung der Temperatur angeschlossen ist, dadurch gekennzeichnet, daß beide Anschlußelektroden (4, 5) über ein induktiv gekoppeltes Spulenpaar (6, 7) von der Oszillatorschaltung (1) galvanisch getrennt sind, wobei die eine Spule (6) mit den beiden Anschlußelektroden (4, 5) und die andere Spule (7) mit den Eingängen (8, 9) der Oszillatorschaltung (1) verbunden ist und daß die mit den Anschlußelektroden verbundene Spule (6) zusammen mit dem piezoelektrischen Element (2) von einem Gehäuse (3) dicht umschlossen ist.

2. Elektronisches Thermometer nach Anspruch 1, dadurch gekennzeichnet, daß als temperatursensitives piezoelektrisches Element (2) ein Kristall eingesetzt ist.

3. Elektronisches Thermometer nach Anspruch 1, dadurch gekennzeichnet, daß als temperatursensitives piezoelektrisches Element (2) ein Schwingquarz eingesetzt ist.

4. Elektronisches Thermometer nach Anspruch 1, dadurch gekennzeichnet, daß das Gehäuse (3) wenigstens teilweise aus diamagnetischem oder paramagnetischem Werkstoff besteht.

5. Elektronisches Thermometer nach Anspruch 4, dadurch gekennzeichnet, daß das Gehäuse (3) aus Keramik, Glas oder Quarzglas besteht.

6. Elektronisches Thermometer nach einem der Ansprüche 1, 4 oder 5, dadurch gekennzeichnet, daß das Gehäuse (3) rohrförmig ausgebildet ist, wobei sich das piezoelektrische Element (2) in einem als Meßspitze (3') ausgebildeten Ende befindet, während die Spule (6) im zur Meßspitze entgegengesetzten Ende (3") angeordnet ist.

7. Elektronisches Thermometer nach Anspruch 6, dadurch gekennzeichnet, daß die zweite Spule (7) auf das Ende (3") des Gehäuses aufsteckbar ist.

8. Elektronisches Thermometer nach einem der Ansprüche 1 bis 7, dadurch gekennzeichnet, daß die eingeschlossene Spule (6) einen Ferritkern (6') aufweist.

9. Elektronisches Thermometer nach Anspruch 8, dadurch gekennzeichnet, daß die zweite Spule (7) mit einem Permanentmagneten (7') fest verbunden ist, welcher zur Zentrierung der induktiven Verbindung beider Spulen (6, 7) dient.

10. Elektronisches Thermometer nach Anspruch 8, dadurch gekennzeichnet, daß die zweite Spule (7) mit einem Elektromagneten fest verbunden ist, welcher zur Zentrierung beider Spulen (6, 7) dient.

11. Elektronisches Thermometer nach Anspruch 8, dadurch gekennzeichnet, daß die zweite Spule (7) einen Gleichstromanteil führt und gleichzeitig als Elektromagnet dient.

12. Elektronisches Thermoemter nach einem der Ansprüche 1 bis 3, dadurch gekennzeichnet, daß die eingeschlossene Spule (6) flächig auf der Innenseite des Gehäuses (3) aufgebracht ist, wobei die Feldlinien senkrecht zur Gehäusewand verlaufen und in die außerhalb des Gehäuses (3) angeordneten Spule (7) eintreten.

Fig.1

EP 0 325 685 A2

8110515.9

Fig. 2a

Fig. 2 b

Fig.3